# EUROPEAN PATENT SPECIFICATION

(11) **EP 1 301 010 B1**
(45) Date of publication and mention of the grant of the patent: **06.04.2005**
(21) Application number: 01440329.9
(22) Date of filing: 03.10.2001
(51) Int. Cl.: H04L 29/12, H04L 12/56

(54) **Method for providing services in a communication network**
Verfahren zur Bereitstellung von Diensten in einem Kommunikationsnetzwerk
Méthode de délivrance de services dans un réseau de communication

(43) Date of publication of application: 09.04.2003
(73) Proprietor: ALCATEL, 75008 Paris (FR)
(72) Inventor: Carrez, François, 94320 Thiais (FR)
(74) Representative: Rausch, Gabriele, Dr.

(56) References cited:
- US-A- 6 151 624
- E. GUTTMAN, C. PERKINS, J. VEIZADES, M. DAY: "Service Location Protocol, Version 2" NETWORK WORKING GROUP, RFC 2608, [Online] June 1999 (1999-06), pages 1-54, XP002191158 IETF Retrieved from the Internet: <URL:www.ietf.org> [retrieved on 2002-02-22]
- E. GUTTMAN, C. PERKINS, J. KEMPF: "Service Templates And Services: Schemes" NETWORK WORKING GROUP, RFC 2609, [Online] June 1999 (1999-06), pages 1-33, XP002191159 IETF Retrieved from the Internet: <URL:www.ietf.org> [retrieved on 2002-02-22]
- HERMANN R ET AL: "DEAPspace - Transient ad hoc networking of pervasive devices" COMPUTER NETWORKS, ELSEVIER SCIENCE PUBLISHERS B.V., AMSTERDAM, NL, vol. 35, no. 4, March 2001 (2001-03), pages 411-428, XP004304856 ISSN: 1389-1286

## Description

### Background of the Invention

The present invention relates to a method for providing services from service provider hosts to service customer hosts in a communication network and more particularly when service customer hosts try to discover available services in the communication network on their own initiative.

A service customer host should be understood, in the context of this invention, as a host of the communication network which want to be delivered a service from a service provider host present in the communication network. For this purpose, the service customer host can download a list of services and select a service from this list. Then, a transaction is launched between the service customer host and the service provider host. This transaction follows usually the client/server model.

An drawback is that service customer hosts are provided with a list of services which possibly contains a lot of services the user of service customer host is not interested in.

Moreover, especially in the context of on-purpose communication networks, such lists of services cannot easily be maintained since the topology and the composition of the on-purpose communication network is often modified. Then, instead of being provided with a list of service provider hosts, a service customer host should be able to apprehend its environment on his own.

A basic service discovery procedure (Service Discovery Protocol) has been implemented in the framework of Bluetooth technology. A such service discovery procedure has been enhanced with the introduction of the salutation protocols dedicated to enable potential service customer hosts to detect corresponding remote service provider hosts in their environment through requests toward a centralized service repository. A service customer host trying to obtain a predefined service generates a request for this service and includes it in the salutation protocol. If a service provider host reachable over the bluetooth interface supports this service, it answers to the request by returning its identifier. Then, a client/server transaction can be performed and the service provided at the service customer host.

Such a salutation protocol with service request as standardized for service customer hosts and service provider hosts compliant to the Bluetooth technologie is described in the document "Mapping salutation architecture APIs to Bluetooth Service Discovery Layer" Version 1.0 01 July 99 from the Bluetooth Special Interest Group.

This solution presents, nevertheless, the disadvantage that both service provider and service customer hosts should use the same language for qualifying the service e.g. same service name, same service parameters, same service options. This is relatively easy to ensure in the framework of Bluetooth capable devices which usually provide standardized and low-level services. In the context of on-purpose configuration network, more complex services should be provided. It is unlikely that any service customer host has a-priori knowledge of the relevant variables to parameterize the service. The result of a service request with parameters guessed at the service customer host and executed at a service provider host is highly unpredictable.

E. Guttman, "service Location Protocol, Version 2" RFC 2608 and E. Guttman, "Service Template and Service Scheme", RFC 2609 disclose a service location protocol where a user supplies the desired type of services and a set of attributes which describe the service. Based on this description, the service location protocol resolves the network address of the service for the user. The service are described according to service templates. The templates are used to generate service registration at service agent or directory agents which are responsible for advertising services.

A particular object of the present invention is to provide a method for providing more efficiently services to service customer hosts especially in the context of on-purpose networks so that the service provider hosts can more accurately request services from service provider hosts.

Another object of the invention is to provide a service customer host structure to perform the method according to the present invention.

### Summary of the Invention

These objects, and others that appear below, are achieved by a method for providing services in a communication network according to claim 1 and a corresponding service customer host according to claim 6.

According to the present invention, a service customer hosts can download a data structure herein called service profile corresponding to the type of service he wants to be provided with and compose a service request criterion made of constrained attributes values and properties of this service profile. He might also simply request for services complying to the service profile without any constraint. The service request is sent to a service description server which contains service description being instantiations of the service profile each comprising additionally an identifier of a service provider host supporting this service. Each server that instantiates such a "matching "service send back its identity and service name. Finally, a client / server communication can be established between the service customer host and the service provider host supporting the requested service, providing that the appropriate service client is present at the customer side.

The method according to the present invention presents the advantage to require few processing power at the service customer host when looking for a service since only the profile describing the service type is downloaded at the service customer host and not the whole available service descriptions. Only when the service has been chosen and the service provider host determined, the service customer host will have to access the service description to launch the client application with the appropriate parameters.

The method according to the present invention presents further the advantage to obtain a very detailed service description thanks to a hierarchic organization of the service profile with inheritance mechanism.

In a preferred embodiment of the present invention, the client application at the service customer host can be updated according to the service description returned by the service description server as result of said service request.

Further advantageous features of the invention are defined in the other dependent claims.

### Brief Description of the Drawings

Other characteristics and advantages of the invention will appear on reading the following description of a preferred embodiment given by way of non-limiting illustrations, and from the accompanying drawings, in which:
- Figure 1 shows a communication network where the method according to the present invention can be used;
- Figure 2 represents an example of service profile and corresponding service description according to the present invention;
- Figure 3 illustrates an embodiment of the method for providing services in a communication network according to the present invention;
- Figure 4 illustrates a preferred embodiment of the method according to the present invention.

### Detailed Description of the Invention

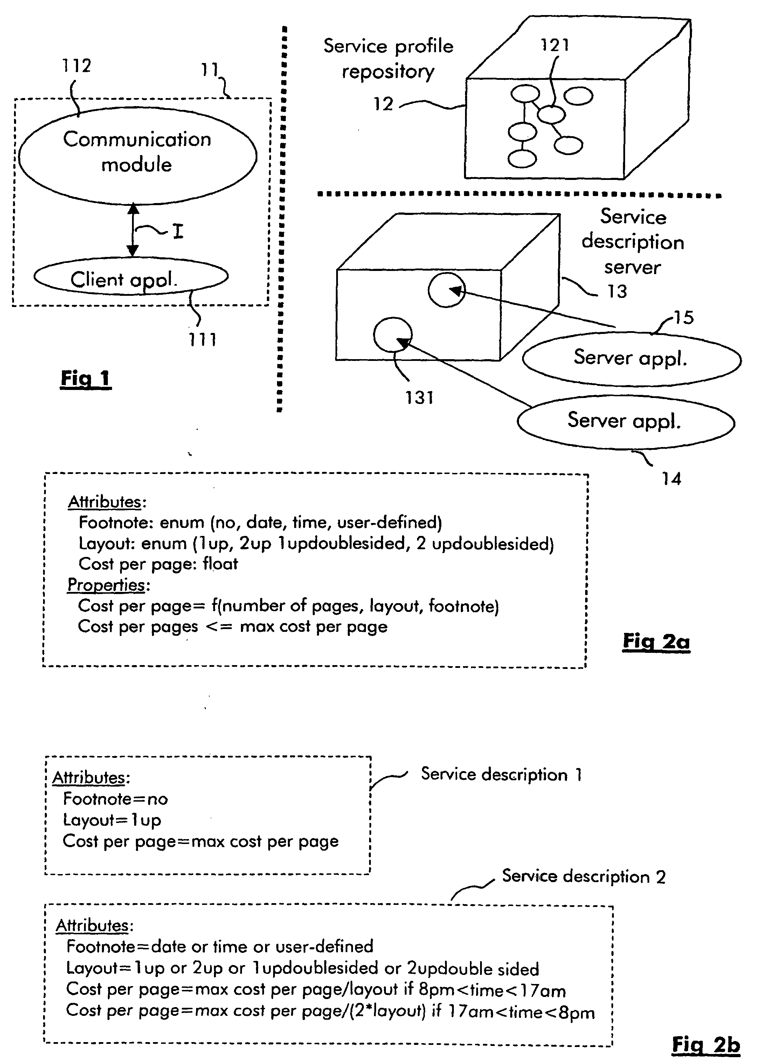

Figure 1 shows a communication network where the method according to the present invention can be used. The communication network comprises a service customer host 11, a service profile repository 12, a service description server 13, and two service provider hosts 14, 15.

Service customer host 11 may be a terminal (i.e. a mobile phone or a personal digital assistant or even a note book) comprising at least a client application 111. For sake of simplicity, in the example detailed below a "print" client application will be illustrated. Other examples may be a client application for digital certificate authentication, for secured money transaction on the internet and so on. Service customer host 11 comprises further a communication module 112, and an interface I between client application 111 and communication module 112. For sake of simplicity, only one client application is represented in service customer host 11. It will be clear that a plurality of client applications can be supported at service customer host 11 for different services all having an interface to one single communication module 112. An internet browser may be used as communication module 112.Service provider hosts 14, 15 comprise server applications and can perform a client / server communication with an appropriate dedicated client application. In the example detailed below, service provider host 14 is a printer with basic print functionality while service provider host 15 is a printer with enhanced functionality.

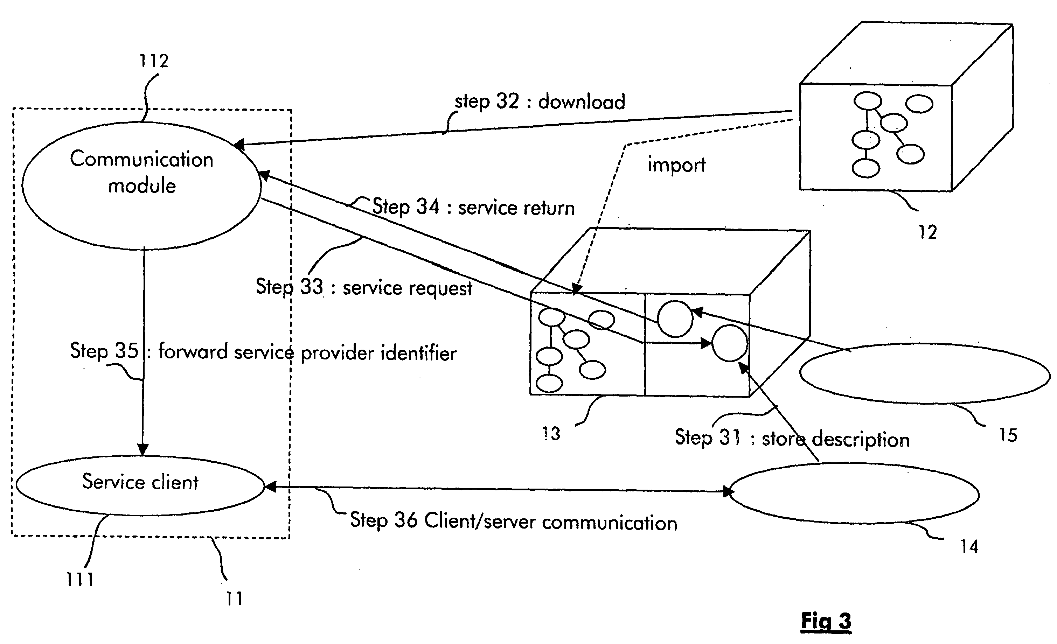

Service profile repository 12 stores service profiles of the different services available in the communication network. In the framework of the present invention a service profile is a data structure comprising attributes used for describing the service type and properties for describing the relations between different attributes. Such a service profile provides and abstract description for a service type. A language used for formalizing service profiles is preferably an object oriented language for example, but not restricted to, the use of the OKBC Open Knowledged Base Connectivity Model. Service profiles may be issued by an independent third party or agreed with in a community of users. Figure 3a gives an example for a service profile related to the service "print".

Service description server 13 comprises instantiations of service profiles called, in the framework of the present invention, service descriptions. Instantiations means that a value is allocated to the attributes of the service, this value should be compatible with the type of the attribute and the properties specified in the service profile.

The service descriptions should be generated by the different service host providers and comply to a service profile stored at the service profile repository 12. They should preferably be uploaded to the service description server 13. Service descriptions compliant to a service profile guaranty that service customer hosts, under the condition that they have the knowledge of the corresponding service profile, can better apprehend the functionality supported by a service provider host 14, 15 and make the best of it. A language used for formalizing service description is preferably compatible to an object oriented model. Figure 3b gives an example for two service descriptions related to the service profile "print".

It will be clear that the number of each components type (i.e. service customer hosts, service provider hosts, repository, service description server) composing the communication network can be chosen according to the topology of the communication network. Moreover, service profile repository 12 and service description server 13 may be co-located.

Preferably, the advantages of the method according to the present invention are the most useful in on-purpose communication networks. Such networks have no centralized control module and can be dynamically built and modified Terminals adapted to build such on-purpose networks also support network nodes functionality and can be both service provider hosts and service customer hosts. Such networks are also known under the name ad-hoc networks. It will, however, be clear for person skilled in the art that the method according to the present invention can also be applied to usual wireless communication networks or even to fixed communication networks.

Figure 2a gives an example of a service profile related to the service "print". The service profile comprises for sake of simplicity three attributes and two properties:
- Attribute 1: footnote type enum (no, date, time, user-defined)
- Attribute 2: layout type enumeration (1up, 2 up, 4up, 1updouble sided, 2updouble sided, 4updouble sided)
- Attribute 3: cost per page type float
- Property 1: cost per page = f(number of pages, layout, footnote)
- Property 2: cost per page < max cost per pages
   According to this service profile the cost per page for this service can depend on the number of pages, on the layout requested and on the contend of the footnote. This service profile is stored at service profile repository 12.
   Figure 2b gives an example of two service description compliant with the service profile print.
   Service description 1 describes the basic print service stored at service provider host 14.
- Footnote =no
- Layout = 1 up
- Cost per page = max cost per page.
This basic service only allows one type of layout and has a fixed cost policy.

Service description 2 describes the enhanced print service stored at service provider host 15.
- Footnote= date or time or user defined
- Layout=(1 up or 2 up or 1 up double sided or 2 double sided)
- Cost per pages = max cost per page/layout if time between 8pm and 17am
- Cost per pages = max cost per page/(2 * layout) else.

This service enables the printing of an additional footnote, a layout with 1up, 2up, 1up double sided or 2updouble sided layout. The cost policy depends on the time and on the chosen layout.

Both service description are stored at service description server 13.

Figure 3 illustrates an embodiment of the method for providing services in a communication network according to the present invention.

The same network entities as in figure 1 are reused for illustrating the method according to the present invention.

The method for providing services according to the present invention comprises following steps:

Steps 31 should be performed once before performing the method according to the present invention.

Step 31 consists in registering a service description compliant with a corresponding service profile at the service description server 13 together with an identifier of the service provider host 14, 15 supporting this service.

Step 32 consists in downloading at communication module 112 a service profile from the service profile repository 12.

Step 33 consists in generating at communication module 112 a request by using attributes and properties of the downloaded service profile describing the service that is required at the service customer host. This service should be compatible with client application 111. A possible request compatible with the example used below may be:
Request (Print (footnote=date, layout=2updoublesided)).

Step 34 consists in searching at service description server 13 a service description fulfilling the request. For this purpose, the service descriptions are preferably stored in a searchable database. For easing the search in the database, the service profiles may be imported at service description server 13. This is especially useful if the service profiles and the service descriptions are organized in a hierarchic tree structure.

If one service description or more fulfil the request, the corresponding service provider host identifier is / are sent back to communication module 112. In this example the identifier of service provider host 14, 15 will be returned.

Step 35 consists in forwarding to client application 111 the identifier of the service provider host supporting the required service

Step 36 consists in performing a client /server communication between client application 111 and service provider host 14, 15. During this client / server communication the service is required by the client side and executed by the service provider host side. Usually, a Graphic User Interface (GUI) is launched by the client application for the user to selects the different values of the service profile attributes.

Alternatively as result of the request at step 35, the service can be automatically launched. Executable code means containing the service provider host identifier and the selected attributes of the request are forwarded from communication module 112, to client application 111 and executed there. This has the advantage not to request any further action of the end-user who has already specified enough the service he wishes.

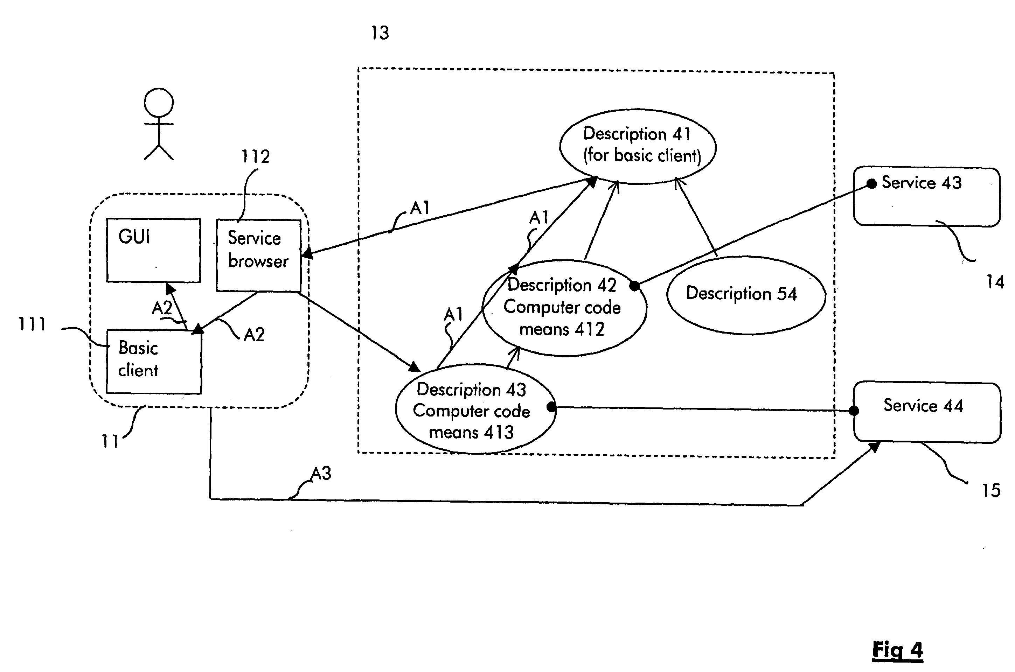

Figure 4 illustrates a second embodiment of the method according to the present invention.

In this preferred embodiment of the present invention, the service profiles and the service descriptions are organized in a hierarchical tree structure with inheritance mechanism. This enables it to optimize the structure of the searchable database at the service description server 13.

In the present example, the hierarchical tree structure comprises four service descriptions 41, 42, 43, 44. Service description 41 is the root description and comprises all common attributes and properties, service description 42 and 44 inherit from service description 41 and comprises further attributes and properties. Service description 43 inherits from service description 42.

All four service descriptions 41, ..., 44 describe services located on different service provider hosts 14, 15.

Moreover, in this preferred embodiment, the client application 111 stored at service customer host 11 is compliant with a service which service description 41, 42 is located at a level of the hierarchical tree structure higher than the service description 43 the service customer host 11 whishes to use.

For example client application 111 is compliant with service description 41 and the service required by service customer host 11 is compliant to service description 43.

In this embodiment, client application computer code means 412, 413 are linked to the service descriptions at the different levels of the hierarchy.

All computer code means may be stored in a table, each service description pointing to the entry of the table containing the corresponding computer code means.

Computer code means 412, resp. 413 are dedicated to update client application 111 so that it becomes compliant to the service description 42, resp.43 having a lower level in the service description hierarchy than the service description 41 it is compliant to.

In the method according to the present embodiment, the steps 31 to 34 described in relation with figure 3 are executed the same way. In the example below, the service description 43 is found to fulfill the request sent by service customer 11 and an identifier of service provider host 14 has been returned to the communication module of service customer host 11 at step 34.

Additionally steps A1 to A4 are executed after step 34.

Step A1 consists in downloading to service customer host 11 the computer code means 412, 413 necessary to update client application 111 so that it becomes compliant to service description 43. In a first embodiment, the whole computer code means may be directly downloaded from service description server to service customer host 11.

Alternatively, several delta updates portions may be successively necessary to perform the update. For example, a first update to upgrade client application 111 from service description 41 to service description 42 and a second update to upgrade service description 42 to service description 43.

Step A2 consists in presenting to the customer a Graphical User Interface taking into account the characteristics of the client application 111 and of the downloaded computer code means.

Step A3 consists in performing a usual client / server communication between client application upgraded by the computer code means and service provide host 14 supporting the service described by service description 43.

Step A4 consists upon termination of the client / server communication in deleting the computer code means from service customer host and return to the original client application 111. This step is optional but recommended to keep the size of the client application 111 as small as possible (i.e. only compatible with the root service description 41)

This embodiment enables to flexibly provide services which are not completely compliant with the chosen service description.

## Claims

1. Method for providing services in a communication network comprising service customer hosts and service provider hosts, said service customer hosts (11) comprising a client application (111) adapted to perform a client /server communication, said method comprising the steps of:
- Storing data structures, herein called service profiles (121), at a predefined service profile repository (12), a service profile (121) comprising attributes and properties representing an abstract description for a service type;
- Storing one or more instantiations of said service profile, herein called service description (131), on a predefined service description server (13), each service description (131) describing a service belonging to one service type and comprising an identifier of a service provider host (14) providing said service.
- Downloading a service profile (121) from said service profile repository (12) to a communication module (112) of said service customer host (11);
- Generating at said service customer host (11) a request describing a service by using attributes and properties of said service profile (121) and sending said request to said service description server (13);
- Searching at said service description server (13) service descriptions (131) fulfilling said request and returning to said communication module (112) an identifier of a service provider host (14) providing a service fulfilling said request;
- Forwarding to said client application (111) said identifier of a service provider host (14, 15) over an interface (I) between said communication module (112) and said client application (111); and
- Performing a client /server communication between said client application (111) and said identified service provider host (14).

2. Method according to claim 1, further comprising the step of returning to said communication module (112) executable code means for automatically starting said client / server communication.

3. Method according to claim 1, being used in ad-hoc communication networks.

4. Method according to claim 1, wherein service profiles and service descriptions are organised in hierarchical tree structure with inheritance mechanisms.

5. Method according to claim 4, wherein each service description refers to computer code means to update said client application, said client application being compatible with a service description at an higher level in said hierarchical tree structure, said method further comprising the steps of:
- downloading said computer code means to said service customer host prior to performing said client / server communication;
- generating a graphic user interface (GUI) comprising the features of said client application and of said computer code means; and
- deleting said computer code means from said service customer host upon termination of said client / server communication.

## Patentansprüche

1. Verfahren zum Bereitstellen von Diensten in einem Kommunikationsnetzwerk, umfassend Diensteteilnehmerhosts und Diensteanbieterhosts, wobei die Diensteteilnehmerhosts (11) eine Clientanwendung (111) beinhalten, die angepaßt wurde, um eine Client-Server-Kommunikation durchzuführen, wobei das Verfahren die Schritte umfaßt:
- Speichern von Datenstrukturen, die hier als Diensteprofile (121) bezeichnet sind, in einer vordefinierten Diensteprofil-Datenbank (12), eines Diensteprofils (121), das Attribute und Eigenschaften beinhaltet, die eine abstrakte Beschreibung für einen Dienstetyp darstellen;
- Speichern einer oder mehr Konkretisierungen des Diensteprofils, hier als Dienstebeschreibung (131) bezeichnet, auf einem vordefinierten Dienstebeschreibungsserver (13), wobei die Dienstebeschreibung (131) einen Dienst beschreibt, der zu einem Dienstetyp gehört und einen Identifikator des den Dienst bereitstellenden Diensteanbieterhost (14) beinhaltet.
- Herunterladen eines Diensteprofils (121) von der Datenbank (12) auf ein Kommunikationsmodul (112) des Diensteteilnehmerhosts (11);
- Erzeugen einer Anfrage auf dem Diensteteilnehmerhost (11), die einen Dienst beschreibt, unter Verwendung der Attribute und Eigenschaften des Diensteprofils (121) und Senden der Anfrage an den Dienstebeschreibungsserver (13);
- Suchen von Dienstebeschreibungen (131) auf dem Dienstebeschreibungsserver (13), die die Anfrage erfüllen, und Rücksenden an das Kommunikationsmodul (112) eines Identifikators eines Diensteanbieterhost (14), der einen Dienst bereitstellt, der die Anfrage erfüllt;
- Übermitteln des Identifikators eines Diensteanbieterhost (14, 15) über eine Schnittstelle (1) zwischen dem Kommunikationsmodul (112) und der Clientanwendung (111) an die Clientanwendung (111); und
- Durchführen einer Client-Server-Kommunikation zwischen der Clientanwendung (111) und dem identifizierten Diensteanbieterhost (14).

2. Verfahren nach Anspruch 1, ferner umfassend den Schritt des Rücksendens ausführbarer Codemittel an das Kommunikationsmodul (112) für das automatische Starten der Client-Server-Kommunikation.

3. Verfahren nach Anspruch 1, das in Ad-hoc-Kommunikationsnetzwerken verwendet wird.

4. Verfahren nach Anspruch 1, wobei die Diensteprofile und die Dienstebeschreibungen in einer hierarchischen Baumstruktur mit Vererbungsmechanismus organisiert sind.

5. Verfahren nach Anspruch 4, wobei jede Dienstebeschreibung auf Computercodemittel Bezug nimmt, um die Clientanwendung zu aktualisieren, wobei die Clientanwendung mit einer Dienstebeschreibung auf einer höheren Ebene in der hierarchischen Baumstruktur kompatibel ist, wobei das Verfahren ferner die Schritte umfaßt:
- Herunterladen der Computercodemittel auf den Diensteteilnehmerhost vor dem Durchführen der Client-Server-Kommunikation;
- Erzeugen einer grafischen Benutzeroberfläche (GUI), umfassend die Merkmale der Clientanwendung und Computercodemittel; und
- Löschen der Computercodemittel vom Diensteteilnehmerhost nach Beendigung der Client-Server-Kommunikation.

## Revendications

1. Procédé destiné à fournir des services dans un réseau de communication comprenant des ordinateurs hôtes des clients de services et des ordinateurs hôtes du fournisseur de services, lesdits ordinateurs hôtes du client de services (11) comprenant une application cliente (111) adaptée pour effectuer une communication client/serveur, ledit procédé comprenant les étapes consistant :
- stocker des structures de données, appelées ici profils de services (121), sur un référentiel de profil de service prédéfini (12), un profil de service (121) comprenant des attributs et des propriétés représentant une description abstraite pour un type de service ;
- stocker une ou plusieurs instanciations dudit profil de service, ici appelé description de service (131), sur un serveur de description de service prédéfini (13), chaque description de service (131) décrivant un service appartenant à un type de service et comprenant un identifiant d'un ordinateur hôte du fournisseur de services (14) fournissant ledit service.
- télécharger un profil de service (121) à partir dudit référentiel de profil de service (12) vers un module de communication (112) dudit ordinateur hôte du client de services (11) ;
- générer sur ledit ordinateur hôte du client de services (11) une requête décrivant un service en utilisant les attributs et les propriétés dudit profil de service (121) et envoyer ladite requête audit serveur de description de service (13) ;
- rechercher sur ledit serveur de description de service (13) les descriptions de service (131) satisfaisant ladite requête et renvoyer audit module de communication (112) un identifiant d'un ordinateur hôte du fournisseur de services (14) fournissant un service satisfaisant ladite requête ;
- réacheminer vers ladite application cliente (111) ledit identifiant d'un ordinateur hôte du fournisseur de services (14, 15) sur une interface (I) entre ledit module de communication (112) et ladite application cliente (111) ; et
- effectuer une communication client/serveur entre ladite application client (111) et ledit ordinateur hôte du fournisseur de services identifié (14).

2. Procédé selon la revendication 1, comprenant, en outre, l'étape consistant à renvoyer audit module de communication (112) un moyen de code exécutable destiné à lancer automatiquement ladite communication client/serveur.

3. Procédé selon la revendication 1, utilisé dans les réseaux de communication ad hoc.

4. Procédé selon la revendication 1, dans lequel les profils de services et les descriptions de services sont organisés en une structure arborescente hiérarchique avec des mécanismes d'héritage.

5. Procédé selon la revendication 4, dans lequel chaque description de service se rapporte à un moyen de code informatique pour mettre à jour ladite application cliente, ladite application client étant compatible avec une description de service à un niveau supérieur dans ladite structure arborescente hiérarchique, ledit procédé comprenant, en outre, les étapes consistant à :
- télécharger ledit moyen de code informatique sur ledit ordinateur hôte de client de services avant d'effectuer ladite communication client/serveur ;
- générer une interface utilisateur graphique (GUI) comprenant les caractéristiques de ladite application client et dudit moyen de code informatique ; et
- supprimer ledit moyen de code informatique dudit ordinateur hôte du client de services à la fin de ladite communication client/serveur.
